# EUROPEAN PATENT APPLICATION

(11) **EP 4 507 315 A1**
(43) Date of publication of application: **12.02.2025**
(21) Application number: 23787519.0
(22) Date of filing: 29.03.2023
(51) Int. Cl.: H04N 21/61

(54) **AUDIO AND VIDEO SYSTEM, ACCESS METHOD, ROUTING FORWARDING METHOD, AND READABLE STORAGE MEDIUM**

(30) Priority: 11.04.2022 CN 202210375838
(71) Applicant: ZTE Corporation, Shenzhen, Guangdong 518057 (CN)
(72) Inventor: WANG, Xiyu, Shenzhen, Guangdong 518057 (CN); HUA, Xinhai, Shenzhen, Guangdong 518057 (CN); JIANG, Tao, Shenzhen, Guangdong 518057 (CN); CHEN, Junjiang, Shenzhen, Guangdong 518057 (CN); LU, Jian, Shenzhen, Guangdong 518057 (CN)
(74) Representative: WBH Wachenhausen Patentanwälte PartG mbB
(86) International application number: PCT/CN2023/084797
(87) International publication number: WO 2023/197873

(57) **Abstract**

The present disclosure discloses an audio and video system, an access method, a routing and forwarding method, and a readable storage medium. The audio and video system includes an audio and video cloud network and an operator network. The audio and video cloud network includes: a control hub (210), including a dispatching center (211) and a routing center (212); media nodes, including a transit node (222) and an edge node (221). The transit node (222) communicates with the routing center (212). The edge node (221) communicates with the transit node (222) and the dispatching center (211). The audio and video cloud network communicates with the operator network. A network architecture of the audio and video cloud network matches a network architecture of the operator network.

## Description

### CROSS-REFERENCE TO RELATED APPLICATION

This application is filed on the basis of Chinese patent application No. 202210375838.3 filed April 11, 2022, and claims priority to the Chinese patent application, the entire contents of which are incorporated herein by reference.

### TECHNICAL FIELD

The present disclosure relates to the technical field of audio and video communication, and in particular, to an audio and video system, an access method, a routing and forwarding method, and a readable storage medium.

### BACKGROUND

With the popularization of mobile Internet and the commercial application of 5th-Generation Mobile Communication Technology (5G), the demand for low-latency, high-reliability audio and video applications is increasing, and Real Time Communication (RTC) has become a hot technology at present. In particular, the advent of the global epidemic has promoted the accelerated development of various industries such as video conferencing, interactive live streaming, and video surveillance based on RTC. Today, RTC has evolved into a complex technology incorporating network transmission, streaming media processing, transmission protocol, codec algorithm, and other related techniques.

Existing audio and video systems cannot meet requirements of a large-scale service scenario based on RTC, and it has a long way to go to reach an intelligent real-time audio and video network system.

Existing audio and video systems cannot provide a communication-level audio and video experience for users: the transmission links of audio and video data are lengthy, the network structure is complex, and the underlying network lacks quality assurance. For example, existing audio and video systems have a large transmission delay and unsatisfactory weak network resistance, and problems such as jitter and blurred screen often occur on the playing terminal device.

Low performance: there is a lack of intelligent dispatching and routing system for forwarding between network element nodes, and the nodes have a single-node bottleneck and cannot support large-scale traffic. For example, all data are transmitted through an optimal link, resulting in that the optimal link become saturated very quickly while other links remain idle.

High costs: transmission networks of different service lines are separated, and have overlapping functionality. The architectures of different modules are highly coupled, requiring heavy operation and maintenance workload. For example, the conferencing network and the interactive live streaming audio and video network are independent of each other, and the costs of repeated construction are high. When an alarm related to a link is detected, a lot of manpower is required for troubleshooting and coordinating the allocation of new resources.

With the deepening of technology research and development, the above phenomena and disadvantages eventually evolve into technical problems regarding Quality of Service (QoS) guarantee of each layer of network, first-mile (last-mile) access from the client to the audio and video network, link transmission in the network, and other aspects in actual projects, leading to unstable audio and video communication and unsatisfactory user experience.

### SUMMARY

The following is a summary of the subject matter set forth in this description. This summary is not intended to limit the scope of protection of the claims.

The present disclosure provides an audio and video system, an access method, a routing and forwarding method, and a readable storage medium.

In accordance with a first aspect of the present disclosure, an embodiment provides an audio and video system, including an audio and video cloud network, where the audio and video cloud network includes: a control hub, including a dispatching center and a routing center; and a plurality of media nodes, including a transit node and an edge node, where the transit node is in communicative connection with the routing center, and the edge node is in communicative connection with the transit node and the dispatching center.

In accordance with a second aspect of the present disclosure, an embodiment provides a method for accessing an audio and video system, applied to the dispatching center in the audio and video system in accordance with the first aspect. The method including: acquiring a client access request reported by a client and node information of a plurality of edge nodes; generating access dispatching information according to the client access request and the node information, where the access dispatching information includes target edge node information; and sending the access dispatching information to the client and a target edge node corresponding to the target edge node information, to allow the client to access the target edge node.

In accordance with a third aspect of the present disclosure, an embodiment provides a routing and forwarding method for an audio and video system, applied to the routing center in the audio and video system in accordance with the first aspect. The routing and forwarding method including: acquiring a client access request from a client, starting transit node information, and link quality information between any two connected transit nodes, where the starting transit node information is node information of a transit node corresponding to the client; parsing the client access request to obtain service requirement information and target transit node information; and generating routing and forwarding path information according to the service requirement information, the starting transit node information, the target transit node information, and the link quality information, and sending the routing and forwarding path information to the transit nodes.

In accordance with a fourth aspect of the present disclosure, an embodiment provides a controller, including: a memory, a processor, and a computer program stored in the memory and executable by the processor which, when executed by the processor, causes the processor to implement the method for accessing an audio and video system in accordance with the second aspect and/or the routing and forwarding method for an audio and video system in accordance with the third aspect.

In accordance with a fifth aspect of the present disclosure, an embodiment provides a computer-readable storage medium, storing a computer-executable instruction which, when executed by a computer, causes the computer to implement the method for accessing an audio and video system in accordance with the second aspect and/or the routing and forwarding method for an audio and video system in accordance with the third aspect.

Additional features and advantages of the present disclosure will be set forth in the description which follows, and in part will be apparent from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a schematic diagram of a system architecture platform in which an access method and/or a routing and forwarding method are carried out according to an embodiment of the present disclosure;
FIG. 2 is a diagram showing an overall framework of an audio and video system according to an embodiment of the present disclosure;
FIG. 3 is a schematic structural diagram of a cloud network integration model according to an embodiment of the present disclosure;
FIG. 4 is a flowchart of a method for accessing an audio and video system according to an embodiment of the present disclosure;
FIG. 5 is a schematic structural diagram of an access dispatching model according to an embodiment of the present disclosure;
FIG. 6 is a flowchart of a method for accessing an audio and video system according to another embodiment of the present disclosure;
FIG. 7 is a flowchart of a method for accessing an audio and video system according to another embodiment of the present disclosure;
FIG. 8 is a flowchart of a routing and forwarding method for an audio and video system according to an embodiment of the present disclosure;
FIG. 9 is a schematic structural diagram of a routing and forwarding model according to an embodiment of the present disclosure;
FIG. 10 is a diagram showing a network topology of transit nodes according to an embodiment of the present disclosure;
FIG. 11 is a score map of a network topology of transit nodes according to an embodiment of the present disclosure; and
FIG. 12 is a schematic diagram of multipath redundant data transmission according to an embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the embodiments described herein are merely used for illustrating the present disclosure, and are not intended to limit the present disclosure.

In the description of the present disclosure, the term "at least one" means one or more, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first" and "second" are merely used for distinguishing technical features, and are not intended to indicate or imply relative importance, or implicitly point out the number of the indicated technical features, or implicitly point out the order of the indicated technical features.

In the description of the present disclosure, unless otherwise explicitly defined, the terms such as "configure", "install/mount" and "connect" should be understood in a broad sense, and those having ordinary skills in the art can reasonably determine the meanings of the above terms in the present disclosure based on the contents of the technical scheme.

With the popularization of mobile Internet and the commercial application of 5G, the demand for low-latency, high-reliability audio and video applications is increasing, and RTC has become a hot technology at present. In particular, the advent of the global epidemic has promoted the accelerated development of various industries such as video conferencing, interactive live streaming, and video surveillance based on RTC. Today, RTC has evolved into a complex technology incorporating network transmission, streaming media processing, transmission protocol, codec algorithm, and other related techniques. Existing audio and video systems cannot meet requirements of a large-scale service scenario based on RTC, and it has a long way to go to reach an intelligent real-time audio and video network system. Existing audio and video systems cannot provide a communication-level audio and video experience for users: the transmission links of audio and video data are lengthy, the network structure is complex, and the underlying network lacks quality assurance. For example, existing audio and video systems have a large transmission delay and unsatisfactory weak network resistance, and problems such as jitter and blurred screen often occur on the playing terminal device. Existing audio and video systems have a low performance: there is a lack of intelligent dispatching and routing system for forwarding between network element nodes, and the nodes have a single-node bottleneck and cannot support large-scale traffic. For example, all data are transmitted through an optimal link, resulting in that the optimal link become saturated very quickly while other links remain idle. Beside, costs are high: transmission networks of different service lines are separated, and have overlapping functionality. The architectures of different modules are highly coupled, requiring heavy operation and maintenance workload. For example, the conferencing network and the interactive live streaming audio and video network are independent of each other, and the costs of repeated construction are high. When an alarm related to a link is detected, a lot of manpower is required for troubleshooting and coordinating the allocation of new resources.

With the deepening of technology research and development, the above phenomena and disadvantages eventually evolve into technical problems regarding QoS guarantee of each layer of network, first-mile (last-mile) access from the client to the audio and video network, link transmission in the network, and other aspects in actual projects, leading to unstable audio and video communication and unsatisfactory user experience.

To alleviate the problem that unstable audio and video network communication affects user experience, embodiments of the present disclosure provide an audio and video system, an access method, a routing and forwarding method, and a readable storage medium. The audio and video system includes an audio and video cloud network, where the audio and video cloud network includes: a control hub, including a dispatching center and a routing center; and a plurality of media nodes, including a transit node and an edge node, where the transit node is in communicative connection with the routing center, and the edge node is in communicative connection with the transit node and the dispatching center. The dispatching center is configured to acquire a client access request reported by a client and node information of a plurality of edge nodes; to generate access dispatching information according to the client access request and the node information, where the access dispatching information includes target edge node information; and to send the access dispatching information to the client and a target edge node corresponding to the target edge node information, to allow the client to access the target edge node. The dispatching center generates the access dispatching information according to the acquired client access request and the acquired node information of the plurality of edge nodes, and sends the access dispatching information to the client and the target edge node to improve the quality of access to the target edge node by the client. The generated access dispatching information can improve the reliability of quick switching of the client in the case of a connection anomaly, thereby improving the stability of audio and video communication and improving user experience. The routing center is configured to acquire a client access request from a client, starting transit node information, and link quality information between any two connected transit nodes, where the starting transit node information is node information of the transit node corresponding to the client; to parse the client access request to obtain service requirement information and target transit node information; and to generate routing and forwarding path information according to the service requirement information, the starting transit node information, the target transit node information, and the link quality information, and send the routing and forwarding path information to the transit nodes. The routing center generates the routing and forwarding path information according to the acquired client access request and link quality information, and sends the routing and forwarding path information to the transit nodes. As such, planning of a routing and forwarding path in the audio and video cloud network is realized to improve the transmission reliability in the audio and video cloud network, thereby improving the stability of audio and video communication and improving user experience.

The embodiments of the present disclosure will be further described in detail below in conjunction with the accompanying drawings.

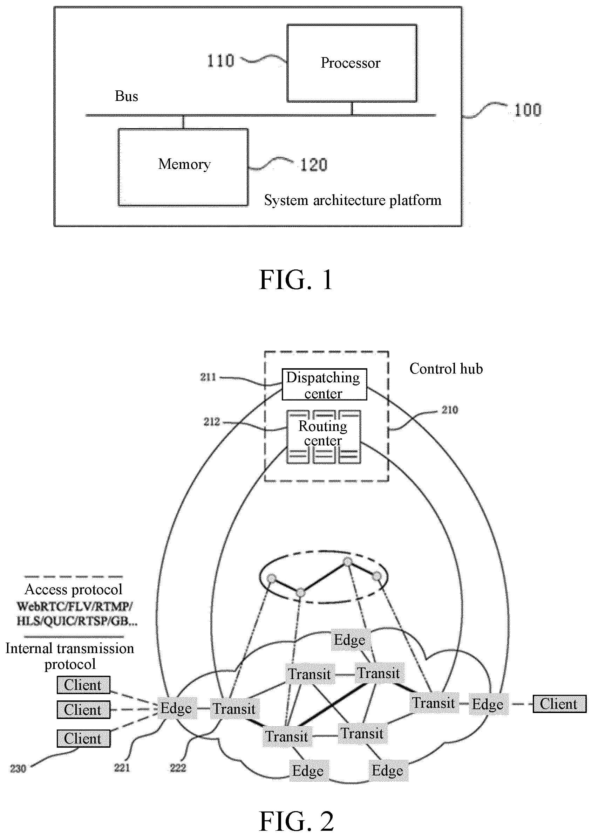

FIG. 1 is a schematic diagram of a system architecture platform in which executing an access method and/or a routing and forwarding method are carried out according to an embodiment of the present disclosure.

The system architecture platform 100 according to an embodiment of the present disclosure includes one or more processors 110 and memories 120. One processor 110 and one memory 120 are taken as an example in FIG. 1.

The processor 110 and the memory 120 can be connected by a bus or in other ways. Connection by a bus is taken as an example in FIG. 1.

The memory 120, as a non-transitory computer-readable storage medium, may be configured for storing a non-transitory software program and a non-transitory computer-executable program. In addition, the memory 120 may include a high-speed random access memory, and may also include a non-transitory memory, e.g., at least one magnetic disk storage device, flash memory device, or other non-transitory solid-state storage device. In some implementations, the memory 120 may include memories located remotely from the processor 110, and the remote memories may be connected to the system architecture platform 100 via a network. Examples of the network include, but not limited to, the Internet, an intranet, a local area network, a mobile communication network, and combinations thereof.

Those having ordinary skills in the art may understand that the apparatus structure shown in FIG. 1 does not constitute a limitation to the system architecture platform 100, and the platform may include more or fewer components than those shown in the figure, or some components may be combined, or a different component arrangement may be used.

FIG. 2 is a diagram showing an overall framework of an audio and video system according to an embodiment of the present disclosure.

In an embodiment of the present disclosure, the audio and video system includes an audio and video cloud network. The audio and video cloud network includes a control hub 210 and media nodes (not shown). The media nodes are responsible for data access and forwarding, including edge nodes 221 and transit nodes 222. The media nodes may report node information and link quality information to the control hub 210, and supports functions such as data redundancy, horse racing mechanism, route maintenance, and parallel transmission. The media nodes implement transmission of the data. The control hub 210 is responsible for controlling and managing the media nodes, and includes a routing center 212 and a dispatching center 211. The dispatching center 211 is mainly intelligently connected to the edge nodes 221. The routing center 212 is mainly responsible for performing routing and forwarding path computation for the transit nodes 222, planning an optimal routing and forwarding path, and intelligently forwarding the data. The control hub 210 implements management of the data.

It should be noted that in an embodiment of the present disclosure, the edge nodes 221 are a plurality of small nodes widely distributed, and are a type of nodes physically closest to a client 230. The edge nodes 221 are each configured for accessing a client 230 based on the principle of proximity or principle of selecting the best qualified, and reporting node information thereof to the dispatching center 211.

It should be noted that in an embodiment of the present disclosure, the transit nodes 222 covers various (inter-provincial) regions, and the connection relationship between the nodes is similar to a full connection, which is a many-to-many structure. The transit nodes 222 are configured for forwarding data quickly with high quality within the network, and reporting link quality information between the transit nodes 222 to the routing center 212.

It should be noted that in an embodiment of the present disclosure, the routing center 212 is responsible for aggregating the link quality information detected between the transit nodes 222, analyzing the information of the entire network, dynamically calculating and planning an optimal path policy, and periodically delivering routing and forwarding information to the transit nodes 222.

It should be noted that in an embodiment of the present disclosure, the dispatching center 211 is responsible for aggregating, classifying, and managing the node information of the edge nodes 221. When receiving a client access request from the client 230, the dispatching center 211 performs analysis based on the client access request and the node information of the edge nodes 221, and allocates a nearest or optimal edge node as a target edge node for access.

It should be noted that in an embodiment of the present disclosure, the audio and video cloud network further surports protocol conversion. In FIG. 2, dashed lines connecting the clients 230 and the edge nodes 221 indicate that a plurality of access protocols are supported, and solid lines connecting between the edge nodes 221 and the transit nodes 222 indicate that a private protocol is adopted in the audio and video cloud network. When the client 230 accesses the audio and video cloud network, protocol conversion is performed at the edge node 221. The audio and video system supports a variety of access protocols externally, i.e., the clients 230 may be based on various protocols, such as Web Real-Time Communication (WebRTC), Real Time Messaging Protocol (RTMP), HTTP Live Streaming (HLS), Quick UDP Internet Connection (QUIC), Real Time Streaming Protocol (RTSP), etc. The private protocol is adopted in the audio and video cloud network to unify the external protocols. As only one transmission protocol is adopted in the audio and video cloud network, protocol conversion is not required to be performed between nodes in the audio and video cloud network, thereby improving transmission efficiency.

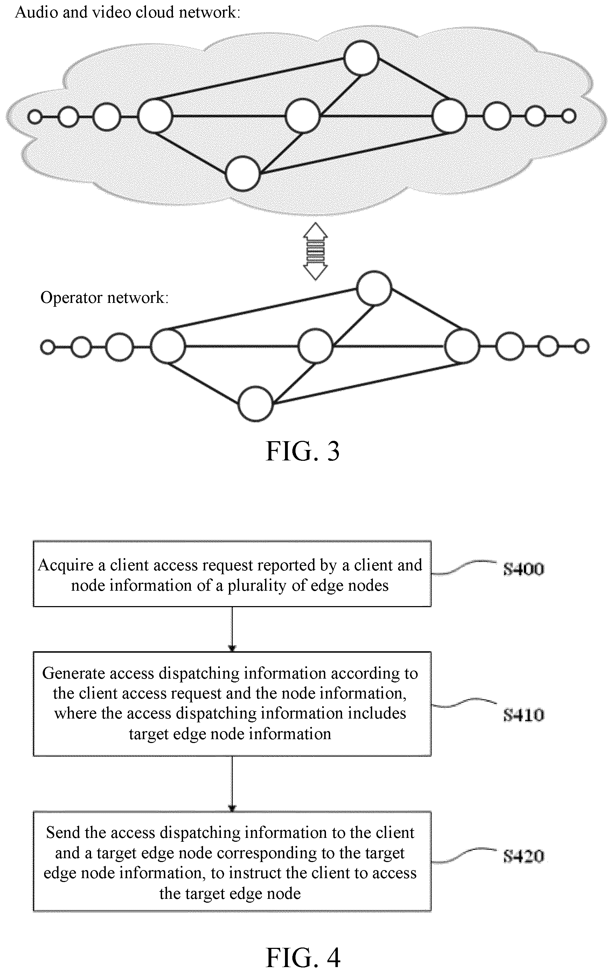

It should be noted that in an embodiment of the present disclosure, as shown in FIG. 3, the audio and video system further includes a cloud network integration model. A network structure of the cloud network integration model may be abstracted into two layers: an upper layer which is the audio and video cloud network on the application side and a lower layer which is a telecommunication operator network. Both the upper and lower layers can provide QoS guarantee for the entire audio and video system. The telecommunication operator network is a mesh-tree networking model. A mesh peer-to-peer structure is applied among backbone nodes in various regions, such that dynamic path planning can be realized to improve transmission quality and reduce delay between the nodes. A tree-like hierarchical structure is applied among provincial sinking nodes to reduce traffic through path multiplexing. The characteristics of mesh and tree topologies are used in combination in different regions to improve the speed, reduce the costs, and comprehensively improve the transmission quality of the entire network. The audio and video cloud network is in communicative connection with the telecommunication operator network, and a network architecture of the audio and video cloud network matches a network architecture of the telecommunication operator network, such that traffic detours can be avoided.

It should be noted that, a 4th-Generation Mobile Communication Technology (4G)/5G network in the telecommunication operator network can provide different levels of QoS capabilities according to service requirements. In an embodiment of the present disclosure the audio and video cloud network at the upper layer, after planning a related transmission path, notifies the telecommunication operator network at the lower layer of the planned related transmission path, and the telecommunication operator network at the lower layer receives the planned related transmission path, and dynamically increases a QoS level of a related transmission path link to enhance the link QoS capability as a whole, thereby ensuring the reliability of the access side network and the transmission quality within the network.

FIG. 4 is a flowchart of a method for accessing an audio and video system according to an embodiment of the present disclosure. The method for accessing an audio and video system in the embodiment of the present disclosure includes, but not limited to, the following steps S400, S410, and S420.

At S400, a client access request reported by a client and node information of a plurality of edge nodes are acquired.

At S410, access dispatching information is generated according to the client access request and the node information, where the access dispatching information includes target edge node information.

At S420, the access dispatching information is sent to the client and a target edge node corresponding to the target edge node information, to allow the client to access the target edge node.

In an embodiment of the present disclosure, the method for accessing an audio and video system is applied to the dispatching center 211 in the audio and video system shown in FIG. 2. Before the client 230 performs access, the dispatching center 211 acquires a client access request reported by the client 230 and node information of a plurality of edge nodes 221. The dispatching center 211 selects a target edge node that satisfies a preset condition according to the client access request and the node information, and generates access dispatching information according to target edge node information of the target edge node. The dispatching center 211 sends the access dispatching information to the client 230 and the target edge node corresponding to the target edge node information in the access dispatching information, to allow the client 230 to access the target edge node. As such, the quality of access to the audio and video cloud network by the client 230 is improved, thereby improving the stability of audio and video communication and improving user experience.

It should be noted that in an embodiment of the present disclosure, the access dispatching information includes a plurality of pieces of target edge node information, i.e., a plurality of target edge nodes 221 are provided for the client 230 to access. When a first target edge node experiences an unexpected situation such as network jitter, the dispatching center 211 switches the first target edge node to a second target edge node, such that time for recalculating a further target edge node for the client 230 to access is saved. In this way, the quality of access to the audio and video cloud network by the client 230 is improved, thereby improving the stability of audio and video communication and improving user experience.

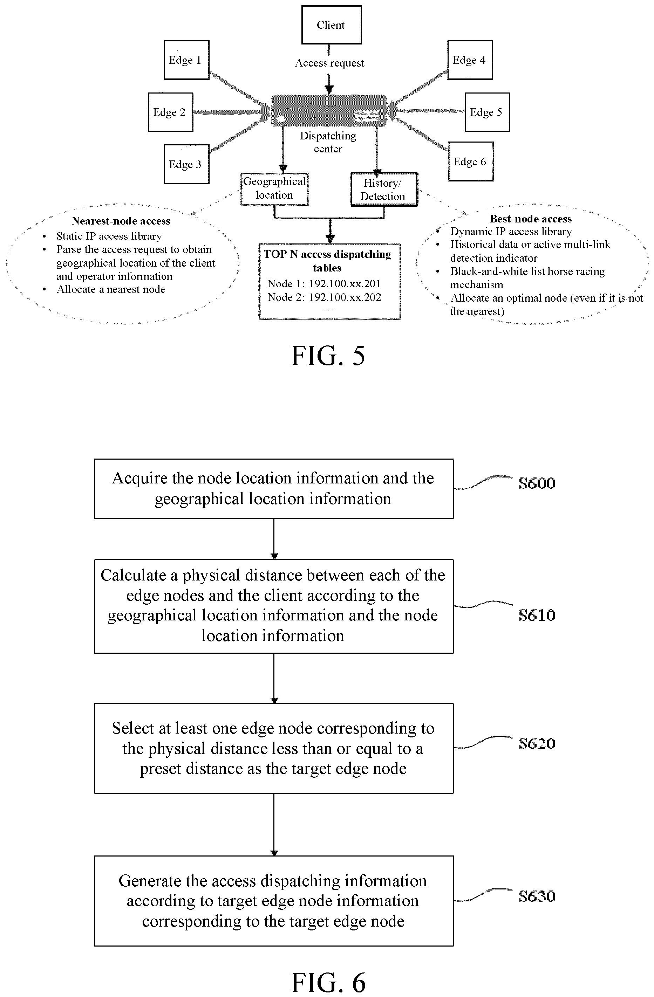

It should be noted that in an embodiment of the present disclosure, an access dispatching model shown in FIG. 5 is further provided. The above access method may be understood as an operation mode of the access dispatching model shown in FIG. 5. Referring to FIG. 5, a client initiates an access request to access an audio and video cloud network. A dispatching center acquires the access request of the client, parses the access request to obtain information such as a client service and an Internet Protocol (IP) address, and selects an access mode according to the obtained information and node information reported by edge nodes (edges 1 to 6 shown in FIG. 5). Then, the dispatching center generates a TOP N access dispatching table and sends the table to the client and the target edge nodes through signaling exchange. Finally, the client receives node information of the target edge nodes and accesses a target edge node. As such, the subsequent data transmission channel goes through the target edge node.

As shown in FIG. 5, the above access mode includes a nearest-node access mode which is selecting a nearest target edge node according to geographical location information, and a best-node access mode which is selecting an optimal target edge node according to historical quality information or an active multi-link detection indicator. The active multi-link detection indicator represents real-time link connection statuses between edge nodes.

For the nearest-node access mode, the dispatching center classifies and manages the edges nodes according to the node location information of the edge nodes, which is equivalent to maintaining a static IP access library. When receiving an access request from a client, the dispatching center parses the access request to obtain geographical location information of the client, and selects a physically nearest edge node from the static IP access library for allocation.

The best-node access mode is different from the nearest-node access mode which maintains a static IP access library. For the best-node access mode, a dynamic IP access library is maintained, which is not preset and fixed, but is dynamically analyzed and managed according to the node location information of the edge nodes and the historical quality information to generate an optimal edge node for the current client. In other words, the best-node access mode is a refined access mode. When receiving an access request from a client, the dispatching center generates an access black-and-white list according to historical quality information of edge nodes to which the client had been assessed, such as login success rate, audio and video stalling rate, etc., or according to real-time link connection statuses between the client and each of the edge nodes, i.e., the active multi-link detection indicator in FIG. 5. A whitelist node refers to an edge node having a link with satisfactory quality to the client, and can be allocated preferentially even if it is not the node physically nearest to the client. A blacklist node refers to an edge node having a link with unsatisfactory quality to the client. It is also feasible to expand whitelist nodes and eliminate blacklist nodes to form a horse racing mechanism.

It should be noted that in an embodiment of the present disclosure, the audio and video system further includes a telecommunication operator network. After generating access dispatching information according to the client access request and the node information, the telecommunication operator network is informed of the access dispatching information, to allow the telecommunication operator network to adjust a QoS level of a link corresponding to an access dispatching path configured for the client 230 to access the target edge node. In this way, the link QoS capability is enhanced as a whole, thereby ensuring the reliability of the access side network.

FIG. 6 is a flowchart of a method for accessing an audio and video system according to another embodiment of the present disclosure. The method for accessing an audio and video system in the embodiment of the present disclosure includes, but not limited to, the following steps S600, S610, S620, and S630.

At S600, node location information and geographical location information are acquired.

At S610, a physical distance between each of the edge nodes and the client is calculated according to the geographical location information and the node location information.

At S620, at least one edge node corresponding to the physical distance less than or equal to a preset distance is selected as the target edge node.

At S630, the access dispatching information is generated according to target edge node information corresponding to the target edge node.

In an embodiment of the present disclosure, the method for accessing an audio and video system is applied to the dispatching center 211 in the audio and video system shown in FIG. 2. The dispatching center 211 parses the acquired client access request to acquire geographical location information of the client 230, and acquires node location information in the node information. The dispatching center 211 calculates a physical distance between each of the edge nodes 221 and the client 230 according to the geographical location information and the node location information; selects at least one edge node 221 corresponding to the physical distance less than or equal to a preset distance as the target edge node; and generates the access dispatching information according to target edge node information corresponding to the target edge node. The access method provided in the embodiment of the present disclosure is a nearest-node access method, in which the physical distance between each of the edge nodes 221 and the client 230 is obtained according to the geographical location information of the client 230 and the node location information, and at least one edge node 221 corresponding to the physical distance less than or equal to the preset distance is selected as the target edge node, to allow the client 230 to access the target edge node. As such, instable data transmission due to an excessively long distance between the client 230 and the edge node 221 is avoided, and the quality of access to the audio and video cloud network by the client 230 is improved, thereby improving the stability of audio and video communication and improving user experience.

It should be noted that in an embodiment of the present disclosure, the access dispatching information includes a plurality of pieces of target edge node information, i.e., a plurality of target edge nodes are provided for the client 230 to access. When a first target edge node experiences an unexpected situation such as network jitter, the dispatching center 211 switches the first target edge node to a second target edge node, such that time for recalculating a further target edge node for the client 230 to access is saved. In this way, the quality of access to the audio and video cloud network by the client 230 is improved, thereby improving the stability of audio and video communication and improving user experience.

It should be noted that in an embodiment of the present disclosure, the audio and video system further includes a telecommunication operator network. After generating access dispatching information according to the client access request and the node information, the telecommunication operator network is informed of the access dispatching information, to allow the telecommunication operator network to adjust a QoS level of a link corresponding to an access dispatching path configured for the client 230 to access the target edge node. In this way, the link QoS capability is enhanced as a whole, thereby ensuring the reliability of the access side network.

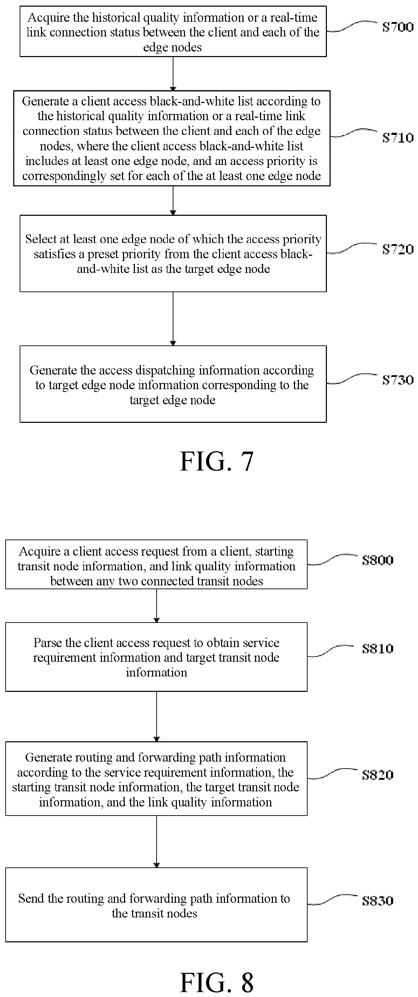

FIG. 7 is a flowchart of a method for accessing an audio and video system according to another embodiment of the present disclosure. The method for accessing an audio and video system in the embodiment of the present disclosure includes, but not limited to, the following steps S700, S710, S720, and S730.

At S700, historical quality information or real-time link connection statuses between the client and each of the edge nodes is acquired.

At S710, a client access black-and-white list is generated according to the historical quality information or real-time link connection statuses between the client and each of the edge nodes, where the client access black-and-white list includes at least one edge node, and each of the at least one edge node is set with a respective one of a plurality of access priorities.

At S720, at least one edge node of which the respective access priority satisfies a preset priority is selected from the client access black-and-white list as the target edge node.

At S730, the access dispatching information is generated according to target edge node information corresponding to the target edge node.

In an embodiment of the present disclosure, the method for accessing an audio and video system is applied to the dispatching center 211 in the audio and video system shown in FIG. 2. After receiving a client access request, the dispatching center 211 acquires historical quality information of edge nodes 221 to which the client 230 had been assessed, such as login success rate, audio and video stalling rate, etc. Alternatively, the dispatching center 211 acquires real-time link connection statuses between the client 230 and the edge nodes 221. A client access black-and-white list is generated according to the historical quality information or the real-time link connection statuses between the client 230 and each of the edge nodes 221, where the client access black-and-white list includes at least one edge node 221, and each of the at least one edge node 221 is set with its respective access priority. At least one edge node 221 of which the access priority satisfies a preset priority is selected from the client access black-and-white list as the target edge node, i.e., a whitelist node. The access dispatching information is generated according to target edge node information corresponding to the target edge node. The access method provided in this embodiment is a best-node access method, in which a client access black-and-white list is generated according to the historical quality information or the real-time link connection statuses between the client 230 and each of the edge nodes 221, at least one edge node 221 of which the access priority satisfies a preset priority is selected from the client access black-and-white list as the target edge node, and the access dispatching information is generated according to target edge node information corresponding to the target edge node. Therefore, the client 230 can always be connected to an optimal target edge node. As such, the quality of access to the audio and video cloud network by the client 230 is improved, thereby improving the stability of audio and video communication and improving user experience.

It should be noted that in an embodiment of the present disclosure, a whitelist node is an edge node 221 that satisfies the preset priority, and can be allocated preferentially even if it is not the edge node 221 physically nearest to the client 230; and a blacklist node is an edge node 221 that does not satisfy the preset priority. Neither the whitelist node(s) nor the blacklist node(s) are fixed edge nodes 221. It is feasible to expand whitelist nodes and eliminate blacklist nodes to form a horse racing mechanism.

It should be noted that in an embodiment of the present disclosure, the access dispatching information includes a plurality of pieces of target edge node information, i.e., a plurality of target edge nodes are provided for the client 230 to access. When a first target edge node experiences an unexpected situation such as network jitter, the dispatching center 211 switches the first target edge to a second target edge node, such that time for recalculating a target edge node for the client 230 to access is saved. In this way, the quality of access to the audio and video cloud network by the client 230 is improved, thereby improving the stability of audio and video communication and improving user experience.

It should be noted that in an embodiment of the present disclosure, the audio and video system further includes a telecommunication operator network. After generating the access dispatching information according to the client access request and the node information, the telecommunication operator network is informed of the access dispatching information, to allow the telecommunication operator network to adjust a QoS level of a link corresponding to an access dispatching path configured for the client 230 to access the target edge node. In this way, the link QoS capability is enhanced as a whole, thereby ensuring the reliability of the access side network.

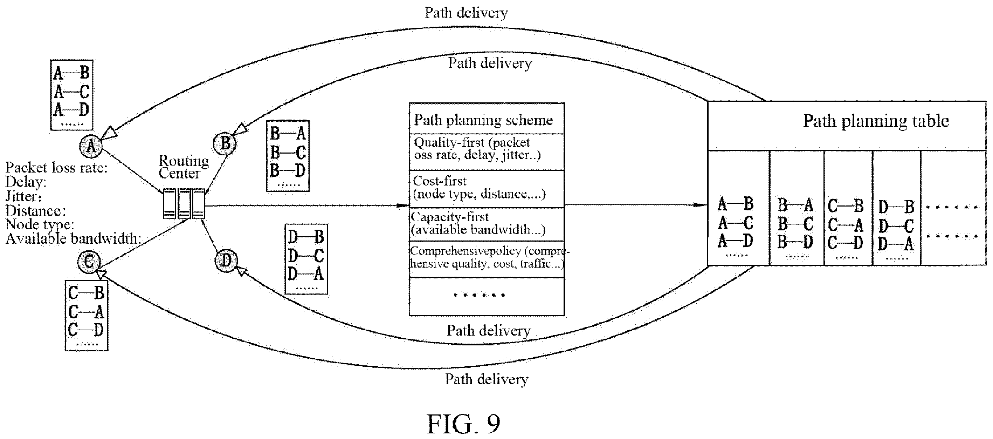

FIG. 8 is a flowchart of a routing and forwarding method for an audio and video system according to an embodiment of the present disclosure. FIG. 9 is a schematic structural diagram of a routing and forwarding model according to an embodiment of the present disclosure. The routing and forwarding method for an audio and video system in an embodiment of the present disclosure includes, but not limited to, the following steps S800, S810, S820, and S830.

At S800, a client access request from a client, starting transit node information, and link quality information between any two connected transit nodes are acquired.

At S810, the client access request is parsed to obtain service requirement information and target transit node information.

At S820, routing and forwarding path information is generated according to the service requirement information, the starting transit node information, the target transit node information, and the link quality information.

At S830, the routing and forwarding path information is sent to the transit nodes.

In an embodiment of the present disclosure, the routing and forwarding method is applied to the routing center 212 in the audio and video system shown in FIG. 2. The routing center 212 is configured to acquire a client access request from a client, starting transit node information, and link quality information between any two connected transit nodes 222, where the starting transit node information is node information of the transit node corresponding to the client 230, and the link quality information includes, but not limited to, metrics such as collection packet loss rate, delay, jitter, distance between nodes, and available bandwidth.

The client access request is parsed to obtain service requirement information and target transit node information, and generates routing and forwarding path information according to the service requirement information, the starting transit node information, the target transit node information, and the link quality information. The routing center 212 selects a corresponding path planning policy according to the service requirement information. In an implementation, the routing center 212 selects a quality-first path planning policy when the service requirement information is QoS-first requirement information. In another implementation the routing center 212 selects a cost-first path planning policy when the service requirement information is service cost-first requirement information. In another implementation the routing center 212 selects a capacity-first path planning policy when the service requirement information is service capacity-first requirement information. The routing center 212 selects a plurality of routing and forwarding paths according to the path planning policy and the link quality information, and generates the routing and forwarding path information corresponding to the routing and forwarding paths, where a starting point of the routing and forwarding path is determined by the starting transit node information, and an end point of the routing and forwarding path is determined by the target transit node information. The routing center 212 sends the generated routing and forwarding path information to the transit nodes 222. As such, network delay is effectively reduced, and transmission reliability within the audio and video cloud network is improved, thereby improving the stability of audio and video communication and improving user experience.

It should be noted that in an embodiment of the present disclosure, the routing and forwarding path information is a path planning table in FIG. 9. The path planning policy is a path planning scheme in FIG. 9.

It should be noted that in an embodiment of the present disclosure, the link quality detection is periodically performed on a link between any two connected transit nodes to obtain link quality information, and the link quality information is uploaded to a data platform, for the routing center to acquire the link quality information from the data platform.

It should be noted that in an embodiment of the present disclosure, the routing center 212 performs path computation according to the link quality information. The routing center 212 extracts metrics from the link quality information, combines the metrics, and assigns weights to the metrics to construct a mathematical model, which is mapped into dimensions such as quality, cost, and capacity, and quantified as a link score. In an example, when the quality-first path planning policy is selected, the packet loss rate, delay, jitter, etc., in the link quality information are combined to construct a mathematical model, which is mapped to a quality score of the link. A lower quality score indicates higher link quality. Similarly, for other path planning policies, different metrics are combined to construct a mathematical model for mapping.

It should be noted that in an embodiment of the present disclosure, a map of current link scores of links in the entire network may be obtained through path computation, and a current shortest routing and forwarding path between the transit nodes 222 is planned using Dijkstra's Algorithm. However, during routing and forwarding path planning, the routing center 212 does not generate only the shortest routing and forwarding path based on the scores, but instead, obtains a plurality of routing and forwarding paths, and sends routing and forwarding path information generated according to the plurality of routing and forwarding paths to the transit nodes 222. The transit nodes 222 maintain voluntarily the routing and forwarding path information. When an anomaly occurs on a link between transit nodes 222 or on a transit node 222 in a routing and forwarding path and the connection quality deteriorates, the transit node(s) 222 (or the routing and forwarding path) can be switched according to the routing and forwarding path information maintained therein to avoid network delay and jitter.

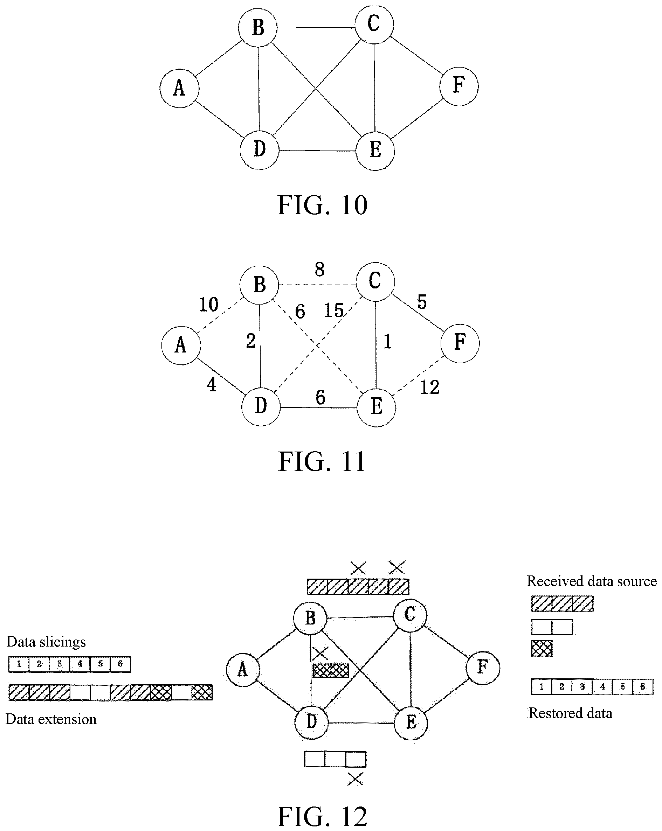

In some embodiments, a current network topology between the transit nodes 222 is shown in FIG. 10, Multiple paths from A to F are available through the permutation and combination of nodes B, C, D, and E, such as ABEF, ADBCF, etc. When the quality-first path planning policy is selected, the link quality information of links of between the transit nodes 222, such as packet loss rate, delay, jitter, and other metrics, is mapped to quality scores to obtain a quality score table below. According to the quality score table, routing and forwarding paths of the current network topology are planned using Dijkstra's Algorithm to obtain routing and forwarding paths from node A to other nodes, which, as denoted by solid-line paths in FIG. 11, include AD, ADB, ADE, ADEC, and ADECF.

| Link | Quality score | Link | Quality score | Link | Quality score | Link | Quality score |
|---|---|---|---|---|---|---|---|
| A-B | 10 | B-A | X | C-D | X | D-C | 15 |
| A-D | 4 | D-A | X | C-E | X | E-C | 1 |
| B-C | 8 | C-B | X | C-F | 5 | F-C | X |
| B-D | X | D-B | 2 | D-E | 6 | E-D | X |
| B-E | 6 | E-B | X | E-F | 12 | F-E | X |

It should be noted that in an embodiment of the present disclosure, as shown in FIG. 12, the routing center 212 performs data slicing through the transit node 222 to obtain a plurality of data slicings, and extends the data slicings; selects a first routing and forwarding path to transmit a first number of the data slicings and selects a second routing and forwarding path to transmit a second number of the data slicings, where transmission quality of the first routing and forwarding path is higher than transmission quality of the second routing and forwarding path, the first number is greater than the second number, and the transmission quality is determined by the link quality information; and performs splicing processing on the received data slicings through the target transit node. With the extension of the data before transmission, the data can be restored at the receiving end even if part of the data is lost during transmission, such that the reliability of data transmission is guaranteed.

It should be noted that in an embodiment of the present disclosure, the audio and video system further includes a telecommunication operator network. After generating routing and forwarding path information according to the service requirement information, the starting transit node information, the target transit node information, and the link quality information, the telecommunication operator network is informed of the routing and forwarding path information, for the telecommunication operator network to adjust a QoS level of links corresponding to the routing and forwarding path. In this way, the transmission quality within the network is guaranteed.

In addition, an embodiment of the present disclosure provides a controller, including: a processor, a memory, and a computer program stored in the memory and executable by the processor.

The processor and the memory may be connected by a bus or in other ways.

It should be noted that the controller in this embodiment may include the processor and the memory in the embodiment shown in FIG. 1. The two embodiments belong to the same concept and therefore have the same implementation principle and technical effects, so the details will not be repeated here.

The non-transitory software program and instructions required to implement the method for accessing an audio and video system and/or the routing and forwarding method for an audio and video system in the foregoing embodiments are stored in the memory which, when executed by the processor, cause the processor to implement the method for accessing an audio and video system and/or the routing and forwarding method for an audio and video system in the foregoing embodiments. It should be noted that the controller in the embodiment of the present disclosure can execute the method for accessing an audio and video system and/or the routing and forwarding method for an audio and video system in the above embodiments. Therefore, for specific implementations and technical effects of the controller in the embodiments of the present disclosure, reference may be made to the implementations and technical effects of the method for accessing an audio and video system and/or the routing and forwarding method for an audio and video system in any of the above embodiments.

In addition, an embodiment of the present disclosure provides a computer-readable storage medium, storing a computer-executable instruction which, when executed by a processor or controller, for example, by a processor in the controller embodiment described above, may cause the processor to implement the method for accessing an audio and video system and/or the routing and forwarding method for an audio and video system in any of the above embodiments, for example, implement the method steps S400 to S420 in FIG. 4, the method steps S600 to S630 in FIG. 6, the method steps S700 to S730 in FIG. 7, or the method steps S800 to S830 in FIG. 8.

The embodiments of the present disclosure provide an audio and video system, including an audio and video cloud network, where the audio and video cloud network includes: a control hub, including a dispatching center and a routing center; and a plurality of media nodes, including a transit node and an edge node, where the transit node is in communicative connection with the routing center, and the edge node is in communicative connection with the transit node and the dispatching center. The dispatching center is configured to acquire a client access request reported by a client and node information of a plurality of edge nodes; to generate access dispatching information according to the client access request and the node information, where the access dispatching information includes target edge node information; and to send the access dispatching information to the client and a target edge node corresponding to the target edge node information, to allow the client to access the target edge node. The dispatching center generates the access dispatching information according to the acquired client access request and the acquired node information of the plurality of edge nodes, and sends the access dispatching information to the client and the target edge node to improve the quality of access to the target edge node by the client. The generated access dispatching information can improve the reliability of quick switching of the client in the case of a connection anomaly, thereby improving the stability of audio and video communication and improving user experience. The routing center is configured to acquire a client access request from a client, starting transit node information, and link quality information of a link between any two connected transit nodes, where the starting transit node information is node information of the transit node corresponding to the client; to parse the client access request to obtain service requirement information and target transit node information; and to generate routing and forwarding path information according to the service requirement information, the starting transit node information, the target transit node information, and the link quality information, and to send the routing and forwarding path information to the transit nodes. The routing center generates the routing and forwarding path information according to the acquired client access request and link quality information, and sends the routing and forwarding path information to the transit nodes. As such, planning of a routing and forwarding path in the audio and video cloud network is realized to improve the transmission reliability in the audio and video cloud network, thereby improving the stability of audio and video communication and improving user experience.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be configured to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or replacements without departing from the essence of the present disclosure. Such equivalent modifications or replacements fall within the scope defined by the claims of the present disclosure.

## Claims

1. An audio and video system, comprising an audio and video cloud network, wherein the audio and video cloud network comprises:
a control hub, comprising a dispatching center and a routing center; and
a plurality of media nodes, comprising a transit node and an edge node, wherein the transit node is in communicative connection with the routing center, and the edge node is in communicative connection with the transit node and the dispatching center.

2. The audio and video system of claim 1, further comprising a telecommunication operator network, wherein the audio and video cloud network is in communicative connection with the telecommunication operator network, and a network architecture of the audio and video cloud network matches a network architecture of the telecommunication operator network.

3. A method for accessing an audio and video system, applied to a dispatching center in the audio and video system of claim 1 or 2, the edge node being one of a plurality of edge nodes each having a respective one of a plurality of pieces of node information, the method comprising:
acquiring a client access request reported by a client and each of the plurality of pieces of node information;
generating access dispatching information according to the client access request and each of the plurality of pieces of node information, wherein the access dispatching information comprises target edge node information; and
sending the access dispatching information to the client and a target edge node corresponding to the target edge node information, to allow the client to access the target edge node, wherein the target edge node is selected from the plurality of edge nodes.

4. The method of claim 3, wherein the client access request comprises geographical location information for the client, and each of the plurality of pieces of the node information comprises a respective one of a plurality of pieces of node location information; and generating the access dispatching information according to the client access request and each of the plurality of pieces of node information comprises:
acquiring each of the plurality of pieces of node location information and the geographical location information, and calculating a respective one of a plurality of physical distances between each of the plurality of edge nodes and the client, wherein the respective one of the plurality of physical distances is calculated according to the geographical location information and the respective one of the plurality of plurality of pieces of node location information;
selecting at least one edge node each corresponding to the respective physical distance less than or equal to a preset distance as the target edge node; and
generating the access dispatching information according to target edge node information corresponding to the target edge node.

5. The method of claim 3, wherein each of a first edge node set of the plurality of the edge nodes to which the client had been accessed has a first node information set of the plurality of pieces of node information, and each of the first node information set comprises a respective one of a plurality of pieces of historical quality information; and generating the access dispatching information according to the client access request and each of the plurality of pieces of node information comprises:
acquiring each of the plurality of pieces of historical quality information or a plurality of real-time link connection statuses each indicating a connection status of a link between the client and a respective one of the plurality of edge nodes;
generating a client access black-and-white list according to each of the plurality of pieces of historical quality information or the plurality of real-time link connection statuses, wherein the client access black-and-white list comprises at least one edge node, and each of the at least one edge node is set with a respective one of a plurality of access priorities;
selecting a second edge node set of the plurality of edge nodes of which the respective one of the access priorities satisfies a preset priority from the at least one edge node in the client access black-and-white list as the target edge node; and
generating the access dispatching information according to the target edge node information corresponding to the target edge node.

6. The method of claim 3, wherein the audio and video system further comprises a telecommunication operator network, the audio and video cloud network is in communicative connection with a telecommunication operator network, and a network architecture of the audio and video cloud network matches a network architecture of the telecommunication operator network; and after generating the access dispatching information according to the client access request and each of the plurality of pieces of node information, the method further comprises:
notifying the telecommunication operator network of the access dispatching information, to allow the telecommunication operator network to adjust a Quality of Service (QoS) level of a link corresponding to an access dispatching path configured for the client to access the target edge node.

7. A routing and forwarding method for an audio and video system, applied to the routing center in the audio and video system of claim 1 or 2, the routing and forwarding method comprising:
acquiring a client access request from a client, starting transit node information, and link quality information between any two connected transit nodes among the plurality of transit nodes, wherein the starting transit node information is node information of the transit node corresponding to the client;
parsing the client access request to obtain service requirement information and target transit node information; and
generating routing and forwarding path information according to the service requirement information, the starting transit node information, the target transit node information, and the link quality information, and sending the routing and forwarding path information to the plurality of transit nodes.

8. The routing and forwarding method of claim 7, wherein generating the routing and forwarding path information according to the service requirement information, the starting transit node information, the target transit node information, and the link quality information comprises:
selecting a path planning policy from a plurality of path planning policies according to the service requirement information; and
selecting a plurality of routing and forwarding paths according to the path planning policy and the link quality information, and generating the routing and forwarding path information corresponding to the plurality of routing and forwarding paths, wherein a starting node of each of the plurality of routing and forwarding paths is determined by the starting transit node information, and an end node of each the plurality of routing and forwarding paths is determined by the target transit node information.

9. The routing and forwarding method of claim 8, wherein the plurality of path planning policies comprise quality-first path planning policy, cost-first path planning policy and capacity-first path planning policy, and selecting the path planning policy from the plurality of path planning policies according to the service requirement information comprises one of:
selecting the quality-first path planning policy in response to the service requirement information being Quality of Service (QoS)-first requirement information;
selecting the cost-first path planning policy in response to the service requirement information being service cost-first requirement information; or
selecting the capacity-first path planning policy in response to the service requirement information being service capacity-first requirement information.

10. The routing and forwarding method of claim 7, further comprising:
performing data slicing through a transit node in the plurality of transit nodes to obtain a plurality of data slicings;
selecting a first routing and forwarding path to transmit a first number of the data slicings and selecting a second routing and forwarding path to transmit a second number of the data slicings, wherein transmission quality of the first routing and forwarding path is higher than transmission quality of the second routing and forwarding path, the first number is greater than the second number, and the transmission quality is determined by the link quality information; and
performing splicing processing on the received data slicings through the target transit node.

11. The routing and forwarding method of claim 8, wherein the audio and video system further comprises a telecommunication operator network, the audio and video cloud network is in communicative connection with a telecommunication operator network, and a network architecture of the audio and video cloud network matches a network architecture of the telecommunication operator network; and after generating the routing and forwarding path information according to the service requirement information, the starting transit node information, the target transit node information, and the link quality information, the method further comprises:
notifying the telecommunication operator network of the routing and forwarding path information, to allow the telecommunication operator network to adjust a QoS level of a link corresponding to the routing and forwarding path.

12. A controller, comprising: a memory, a processor, and a computer program stored in the memory and executable by the processor which, when executed by the processor, causes the processor to perform the method for accessing an audio and video system of any one of claims 3 to 6 or the routing and forwarding method for an audio and video system of any one of claims 7 to 11.

13. A computer-readable storage medium, storing a computer-executable instruction which, when executed by a computer, causes the computer to perform the method for accessing an audio and video system of any one of claims 3 to 6 and/or the routing and forwarding method for an audio and video system of any one of claims 7 to 11.
